(19)

Europäisches
Patentamt

European
Patent Office

Office européen
des brevets

(11) **EP 2 880 750 B1**

(12) **EUROPÄISCHE PATENTSCHRIFT**

(45) Veröffentlichungstag und Bekanntmachung des
Hinweises auf die Patenterteilung:
**22.05.2019   Patentblatt 2019/21**

(21) Anmeldenummer: **13747967.1**

(22) Anmeldetag: **11.07.2013**

(51) Int Cl.:
*H02K 29/03* (2006.01)          *H02K 1/27* (2006.01)

(86) Internationale Anmeldenummer:
**PCT/EP2013/002053**

(87) Internationale Veröffentlichungsnummer:
**WO 2014/019641 (06.02.2014 Gazette 2014/06)**

(54) **PERMANENTMAGNET-SYNCHRONMOTOR UND SERVOLENKUNGSANORDNUNG**

PERMANENT MAGNET SYNCHRONOUS MOTOR AND POWER-ASSISTED STEERING SYSTEM

MOTEUR SYNCHRONE À AIMANTS PERMANENTS ET SYSTÈME DE DIRECTION ASSISTÉE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **31.07.2012   DE 102012213465**

(43) Veröffentlichungstag der Anmeldung:
**10.06.2015   Patentblatt 2015/24**

(73) Patentinhaber: **Brose Fahrzeugteile GmbH & Co.
Kommanditgesellschaft, Würzburg
97076 Würzburg (DE)**

(72) Erfinder:
 • **OMBACH, Grzegorz
   81739 München (DE)**
 • **STEEGMULLER, Horst
   97076 Würzburg (DE)**
 • **CHLEBOSZ, Wojciech
   97070 Würzburg (DE)**

(74) Vertreter: **Isarpatent
Patent- und Rechtsanwälte Behnisch Barth
Charles
Hassa Peckmann & Partner mbB
Friedrichstrasse 31
80801 München (DE)**

(56) Entgegenhaltungen:
EP-A1- 1 677 408          DE-A1-102007 029 157
DE-A1-102009 000 681     JP-A- S63 140 645

EP 2 880 750 B1

**Beschreibung**

GEBIET DER ERFINDUNG

Die vorliegende Erfindung betrifft einen Permanentmagnet-Synchronmotor, insbesondere elektrischer Dreiphasenmotor. Die vorliegende Erfindung bezieht sich auch auf eine elektrische Servolenkungsanordnung eines Kraftfahrzeugs.

TECHNISCHER HINTERGRUND

Derartige Permanentmagnet-Synchronmotoren werden beispielsweise in Antriebseinrichtungen von Kraftfahrzeugen, insbesondere in Servolenkungssystemen und dergleichen, eingesetzt.

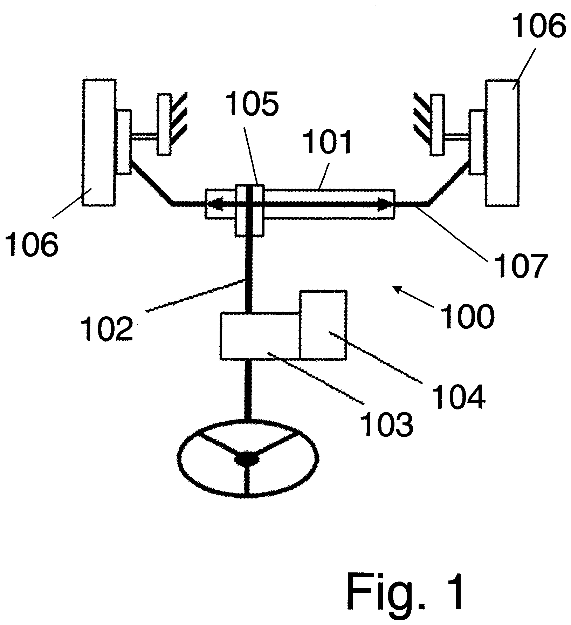

Fig. 1 zeigt schematisch den Aufbau und die Funktionsweise einer allgemein bekannten Servolenkung 100 für ein Kraftfahrzeugs. Die dort dargestellte Servolenkung umfasst ein Lenkgetriebe 101, eine Lenkwelle 102 mit einem nicht näher bezeichneten Lenkrad und einen Servoantrieb 103 mit einer Steuereinheit 104. Eine Spurstange 107 steht mit dem Lenkgetriebe 101 über ein Ritzel 105 in Zusammenwirkung. Das Lenkgetriebe 101 weist hier eine Zahnstange (nur symbolisch durch einen Doppelpfeil angedeutet) auf, die mit dem Ritzel 105 verbunden ist. Das Ritzel 105 ist mit dem Lenkrad über die Lenkwelle 102 drehbar gekoppelt. Die Spurstange 107 steht mit lenkbaren Rädern 106 des Kraftfahrzeugs in Zusammenwirkung.

Der Servoantrieb 103 ist z.B. mit einem elektrischen Dreiphasenmotor ausgerüstet und mit der Steuereinheit 104 hier zwischen dem Lenkrad und dem Lenkgetriebe 101 angebracht. Der Servoantrieb 103 dient als Unterstützung bei Lenkvorgängen, indem er mit der Zahnstange zusammenwirkt. Hierzu kann der Servoantrieb 103 an einer Lenksäule angebracht sein.

Ein derzeitig als Servoantrieb 103 verwendeter Motor kann ein bürstenloser Motor, z.B. ein Permanentmagnet-Synchronmotor oder Asynchronmotor, sein. Beispielsweise weist ein Permanentmagnet-Synchronmotor einen Stator mit Statornuten, in denen Wicklungen angeordnet sind, und einen Rotor mit Permanentmagneten auf. Die Permanentmagneten sind z.B. aus einem Material der so genannten Seltenen Erden hergestellt und speichenförmig in dem Rotor angeordnet.

Ein solcher Motor muss zumindest die folgenden zwei Hauptanforderungen erfüllen: 1) Leistungsfähigkeit und 2) Sicherheit. In Bezug auf die Leistungsfähigkeit sind Parameter wie zum Beispiel Leistungsdichte, maximales Ausgangsdrehmoment, Drehmomentschwankung bzw. -welligkeit und Rastmoment bzw. pulsierendes Moment von Bedeutung. Im Falle der Sicherheit ist u.a. der Parameter maximales Bremsmoment bei einem Phasenkurzschluss kritisch und muss auf einen Wert von ungefähr 0,6 Nm bei vollständigem Kurzschluss einer Phase begrenzt sein.

Die WO 2002/060740 A2 und die EP 1028047 B1 zeigen Beispiele oder Lösungsvorschläge obiger Probleme auf.

Die erhöhten Anforderungen an die Einsatzbedingungen in einem Kraftfahrzeug insbesondere mit Bezug auf ein möglichst geringes Bauvolumen, niedriges Gewicht, geringe Anzahl der verwendeten Einzelteile und gleichzeitig hohem Wirkungsgrad, und die oben genannten Parameter resultieren in der stets vorhandenen Forderung, einen entsprechend verbesserten Permanentmagnet-Synchronmotor bereitzustellen.

Die DE 10 2009 000681 A1 beschreibt eine Synchronmaschine, welche einen Rotor mit Rotorpolen, der drehbar um eine Mittenachse angeordnet ist, und einen Stator mit 12 Statorzähnen, die in einer radialen Richtung bezüglich der Mittenachse von dem Stator in Richtung des Rotors abstehen, umfasst. Jeder der Statorzähne ist von einer nur einen der Statorzähne umgebenden Statorspule umgeben. Die Synchronmaschine hat ein definiertes Durchmesser-Längen-Verhältnis.

Die DE 10 2007 029157 A1 betrifft einen Synchronmotor mit einer Statoranordnung mit zwölf Statorzähnen und einem Rotor mit zehn Rotorpolen. Die Rotorpole sind durch Luftspalte getrennt und als Sinuspole ausgebildet. Die Synchronmaschine weist ein definiertes Durchmesser-Längen-Verhältnis auf.

Die EP 1 677 408 A1 beschreibt einen Rotor für eine sich drehende Maschine, ein Herstellungsverfahren eines Rotors mit einer hohen Genauigkeit und eines Motors für eine elektrisch angetriebene Lenkung. Das Herstellungsverfahren des Rotors und der Motor für die elektrisch angetriebene Lenkung sind so ausgebildet, dass die Genauigkeit einer Welle selbst nicht verringert ist, ein Kern keine übermäßigen Deformationen aufweist, und die Welle und der Kern so verbunden werden, dass die Genauigkeit dieser Bauteile beibehalten wird. Der Rotor wird durch einen Rotorkern gebildet, welcher durch Schichtung einer Vielzahl von Silizium-Stahlplatten geformt wird und eine zentrale Durchgangsbohrung aufweist. Eine Welle wird durch die Durchgangsbohrung gepresst. Der Rotorkern wird örtlich nur in einem Abschnitt nahe der Oberfläche der Durchgangsbohrung einer Wärmebehandlung unterzogen.

ZUSAMMENFASSUNG DER ERFINDUNG

Vor diesem Hintergrund liegt der vorliegenden Erfindung die Aufgabe zugrunde, einen verbesserten Permanentmagnet-Synchronmotor anzugeben.

Erfindungsgemäß wird diese Aufgabe durch einen Permanentmagnet-Synchronmotor mit den Merkmalen des Patentanspruchs 1 und/oder durch eine Servolenkungsanordnung mit den Merkmalen des Patentanspruchs 8 gelöst. Weitere Ausgestaltungsformen der Erfindung sind in den abhängigen Ansprüchen 2 - 7 definiert.

Die der vorliegenden Erfindung zugrunde liegende Idee besteht darin, dass ein maximales Bremsmoment des Permanentmagnet-Synchronmotors basierend auf einem vorher festgelegten Durchmesser-Längen-Verhältnis, einer Rotorpolzahl und einer Anzahl der.Statornuten vorher festlegbar ist. Ein solcher Permanentmagnet-Synchronmotors weist damit die Vorteile eines sehr geringen Rastmomentes verbunden mit einer hohen Leistungsdichte und gleichzeitig niedriger Momentwelligkeit und hoher Fehlertoleranz auf.

Ein weiterer Vorteil besteht darin, dass der erfindungsgemäße Permanentmagnet-Synchronmotor ein im Vergleich zu herkömmlichen Permanentmagnet-Synchronmotoren relativ niedrigeres Bremsmoment aufweist, welches bis zu 40% geringer sein kann.

Im Vergleich zu einem herkömmlichen Permanentmagnet-Synchronmotor weist der erfindungsgemäße Permanentmagnet-Synchronmotor zudem die folgenden Vorteile auf:

- erhöhte Leistungsfähigkeit von ca. 10%;
- um ca. 40% niedrigeres Bremsmoment;
- reduziertes Rastmoment;
- reduzierte Momentenwelligkeit;
- kein Relais erforderlich;
- Dreieckschaltung kann verwendet werden;
- einfache Statorkonstruktion.

Das vorher festgelegte Durchmesser-Längen-Verhältnis des Rotors bezeichnet einen Quotienten aus einem Durchmesser des Rotors und einer Länge des Rotors. Somit sind einfache geometrische Parameter, die einfach zu beherrschen sind, bestimmend für die Festlegung des maximalen Bremsmomentes.

Der beschriebene Permanentmagnet-Synchronmotor ist bevorzugt für die Antriebseinrichtung einer Kraftfahrzeug-Servolenkung geeignet. Denkbar sind aber auch andere Anwendungen bei anderen Antriebseinrichtungen, wie etwa bei elektrischen Feststellbremsen.

Vorteilhafte Ausgestaltungen und Weiterbildungen der Erfindung ergeben sich aus den Unteransprüchen sowie aus der Beschreibung in Zusammenschau mit den Figuren der Zeichnung. Der Permanentmagnet-Synchronmotor weist neun oder zwölf Statornuten auf. Die Rotorpolzahl des Rotors beträgt vorzugsweise sechs, acht, zehn oder vierzehn. Dabei kann ein übliches Standarddesign eines Stators verwendet werden.

Es hat sich in überraschender Weise herausgestellt, dass das vorher festgelegte Durchmesser-Längen-Verhältnis des Rotors, die Rotorpolzahl und die Anzahl der Statornuten gemäß folgender Tabelle im Zusammenhang stehen:

| Rotorpolzahl 210-n | Anzahl Statornuten 202 | DLV |
|---|---|---|
| 6 | 9 | > 1,63 |
| 8 | 12 | > 1,55 |
| 10 | 12 | > 1,50 |
| 14 | 12 | > 1,42 |

Der Rotor weist mindestens ein Rotorpaket auf, wobei eine Rotorpaketzahl von der Rotorlänge gemäß folgender Tabelle abhängig ist:

| Rotorlänge L (mm) | Rotorpaketzahl 209-n |
|---|---|
| L ≤ 20 | 1 |
| 20 ≤ L ≤ 40 | 1 oder 2 |
| 40 ≤ L ≤ 60 | 2 oder 3 |
| 60 ≤ L ≤ 100 | 3 oder 4 |

Außerdem können bei einer Rotorpaketzahl größer als eins die Rotorpakete untereinander um einen Verschränkungswinkel um eine Rotorachse verdreht angeordnet sein. Dabei kann der Verschränkungswinkel von dem Durchmesser-Längen-Verhältnis des Rotors gemäß folgender Tabelle abhängig sein:

| Rotorpolzahl 210-n | Anzahl Statornuten 202 | Verschränkungswinkel $\gamma$ (°) | DLV |
|---|---|---|---|
| 6 | 9 | $9 \pm 2$ | > 1,63 |
| 8 | 12 | $7,5 \pm 2$ | > 1,55 |
| 10 | 12 | $6 \pm 2$ | > 1,50 |
| 14 | 12 | $2 \pm 1$ | > 1,42 |

In einer weiteren Ausführungsform weist der Stator eine Dreiphasen-Wicklungen in einer Dreieckschaltung auf. Dies ist vorteilhaft, da einerseits ein so genanntes Sternrelais zum Auftrennen einer Phase bei Kurzschluss entfallen kann. Andererseits wird dadurch eine Fertigung der Wicklungen erleichtert.

Der Stator kann aber auch eine Dreiphasen-Wicklungen in einer Sternschaltung aufweisen. Auch hierbei kann das so genannte Sternrelais zum Auftrennen einer Phase bei Kurzschluss entfallen.

In einer weiteren Ausführungsform können die Permanentmagnete des Rotors Ferritmagnete oder/und Materialien aus Seltenen Erden enthalten. Hierbei kann es aufgrund des vorher festlegbaren Durchmesser-Längen-Verhältnisses und der anderen Parameter möglich sein, dass Permanentmagnete in einer geringen Leistungsstufe einsetzbar sind, was die Kosten für die erfindungsgemäßen Permanentmagnet-Synchronmotoren signifikant senkt.

INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:

Fig. 1    eine schematische Darstellungen einer Servolenkungsanordnung nach dem Stand der Technik;

Fig. 2    eine schematische Draufsicht eines Ausführungsbeispiels eines erfindungsgemäßen Permanentmagnet-Synchronmotors;

Fig. 3    eine schematische Perspektivansicht eines Rotors des erfindungsgemäßen PermanentmagnetSynchronmotors nach Fig. 2;

Fig. 4    eine schematische Teilseitenansicht des Rotors des erfindungsgemäßen PermanentmagnetSynchronmotors nach Fig. 2;

Fig. 5-6    Schaltbilder von Wicklungen des erfindungsgemäßen Permanentmagnet-Synchronmotors nach Fig. 2; und

Fig. 7    eine grafische Darstellung eines Bremsmomentes in Abhängigkeit von einem Durchmesser-LängenVerhältnis von Rotoren des erfindungsgemäßen Permanentmagnet-Synchronmotors nach Fig. 2.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist -jeweils mit denselben Bezugszeichen versehen.

BESCHREIBUNG VON AUSFÜHRUNGSBEISPIELEN

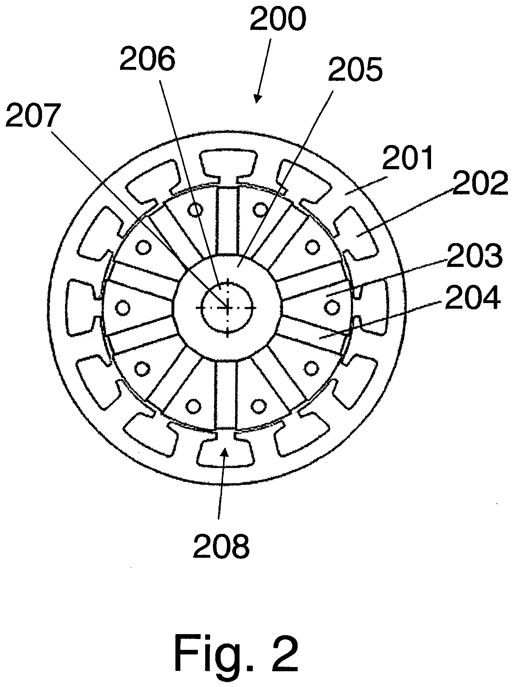

In Fig. 2 zeigt eine schematische Draufsicht eines Ausführungsbeispiels eines erfindungsgemäßen Permanentmagnet-Synchronmotors 200.

Der Permanentmagnet-Synchronmotor 200 in Fig. 2 weist einen Stator 201 mit Statornuten 202, in denen Wicklungen (nicht gezeigt) angeordnet sind, und einen Rotor 208 mit einem Rotorkern 203 und Permanentmagneten 204, die hier in Radialrichtung des Elektromotors innerhalb des Rotors 208 speichenförmig zwischen Abschnitten des Rotorkerns 203 angeordnet sind. Der Rotor 208 befindet sich innerhalb des Stators 201. Die Abschnitte des Rotorkerns 203 und die Permanentmagneten 204 sind auf einem Rotorkörper 206 befestigt, durch welchen eine Rotorwelle 206 mit einer Rotorachse 207 verläuft. Die Rotorwelle 206 mit der Rotorachse 207 steht hier senkrecht auf der Zeichnungsebene. Der Rotor 208 befindet sich innerhalb des Stators 201 und besitzt mit diesem die gemeinsame Rotorachse, d.h. Rotor 208 und Stator 201 sind koaxial. Die Permanentmagneten 204 sind so angeordnet, dass sich immer gleichnamige Pole gegenüberstehen, d.h. Nordpole N liegen gegenüber Nordpolen N und Südpole S gegenüber Südpolen S.

Der Stator 201 ist mit zwölf Statornuten 202 und zwölf Statorpolen ausgebildet und kann gerade oder schräg ausgebildet sein. D.h. die Statornuten 202 verlaufen geradlinig parallel zur Rotorachse 207 oder schräg zur dieser. Der Rotor 208 ist demgegenüber hier ein zehnpoliger Rotor, d.h. er weist zehn Permanentmagnete 204 auf. Die Permanentmagnete 204 können Ferritmagnete sein oder/und beispielsweise Materialien der Seltenen Erden aufweisen.

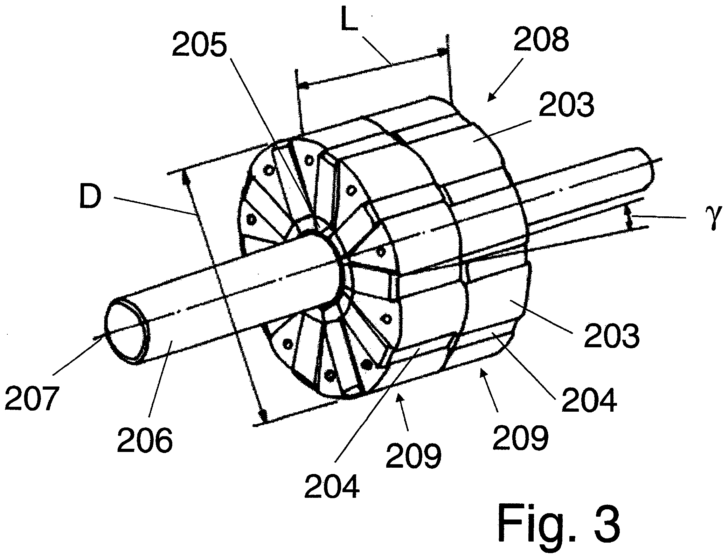

Fig. 3 zeigt eine schematische Perspektivansicht eines Ausführungsbeispiels des Rotors 208 des Permanentmagnet-Synchronmotors 200 nach Fig. 2.

Auf der Rotorwelle 206 sind hier zwei Rotorpakete 209 aufgebracht. Die Permanentmagneten 204 sind radial in Speichenform zwischen Abschnitten der jeweiligen Rotorkerne 203 angeordnet. Die Rotorkerne 203 und die Permanentmagneten 204 sind in nicht näher dargestellter Weise mit dem Rotorkörper 205 verbunden, welcher auf der Rotorwelle 206 befestigt ist.

Der Rotor 208 weist einen Außendurchmesser auf, welcher als Rotordurchmesser D angegeben ist. In Längsrichtung parallel zu der Rotorachse 207 besitzt der Rotor ein Längsmaß, das als Rotorlänge L bezeichnet ist. Unter der Rotorlänge L ist hier die Gesamtlänge der Rotorpakete 209 in Richtung der Rotorachse 207 zu verstehen. Die beiden Rotorpakete 209 sind untereinander um einen Verschränkungswinkel $\gamma$ um die Rotorachse 207 verdreht auf der Rotorwelle 206 angeordnet.

Es hat sich überraschend herausgestellt, dass ein bestimmtes Verhältnis geometrischer Abmessungen des Rotors 208 in Kombination mit den Permanentmagneten 204, z.B. als Ferritpermanentmagnete, und weiteren Parametern des Rotors 208 und Stators 201 maßgebend zur Begrenzung eines maximalen Bremsmomentes des Permanentmagnet-Synchronmotors 200 ist. Ein solches geometrische Verhältnis ist ein Durchmesser-Längen-Verhältnis DLV zwischen dem Rotordurchmesser D und der Rotorlänge L, nämlich der dimensionslose Quotient:

$$\mathrm{DLV} = \mathrm{D/L} \qquad\qquad\qquad (1)$$

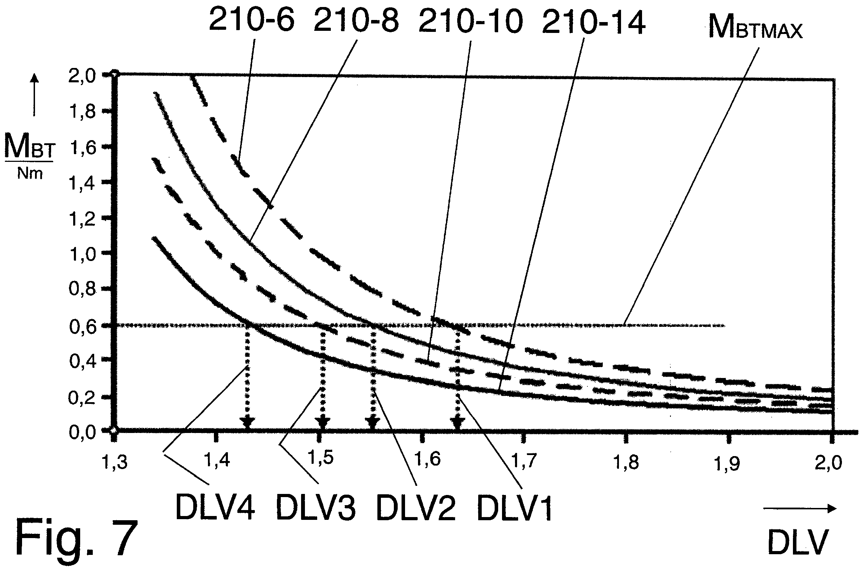

Die weiteren Parameter sind die Pol- bzw. Zähnezahl des Stators, eine Rotorpolzahl 210-n (siehe Fig. 7) des Rotors 208 und der Verschränkungswinkel $\gamma$ der Rotorpakete 209 ab einer Rotorpaketzahl 209-n größer als eins. Hierauf wird unten noch näher eingegangen.

Dieses bestimmte Durchmesser-Längen-Verhältnis DLV mit den entsprechenden Randbedingungen basierend auf den weiteren Parametern ermöglicht einen Permanentmagnet-Synchronmotor 200 mit hoher Leistung mit Permanentmagneten 204 in einer geringen Leistungsstufe. Außerdem ergibt sich ein geringes Bremsmoment bei einem Kurzschluss einer Phase.

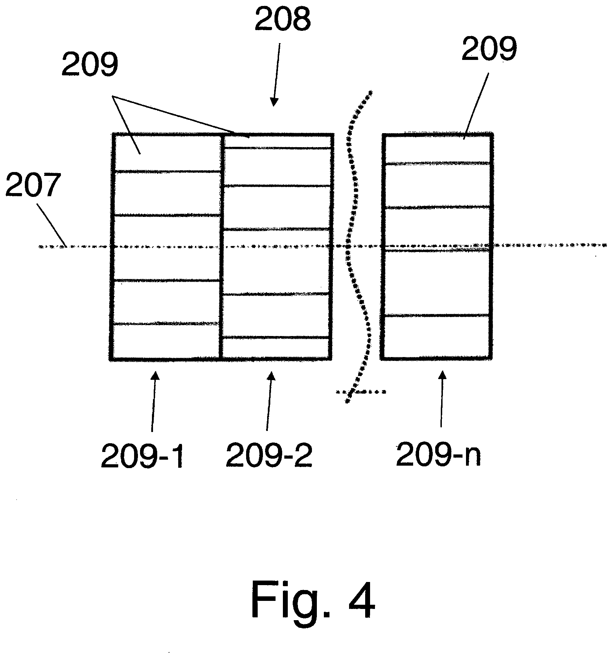

Fig. 4 zeigt eine schematische Teilseitenansicht des Rotors 208 des erfindungsgemäßen Permanentmagnet-Synchronmotors 200 nach Fig. 2.

Der Rotor 208 kann ein Rotorpaket 209 oder auch mehr als die hier gezeigten zwei Rotorpakete 209 aufweisen. Hier sind mehrere Rotorpakete 209 mit einer jeweiligen Rotorpaketzahl 209-1, 209-2 ... 209-n gezeigt. Die Rotorpakete 209 weisen untereinander den Verschränkungswinkel $\gamma$ auf und sind in Axialrichtung des Rotors 208 auf der Rotorachse 207 angeordnet.

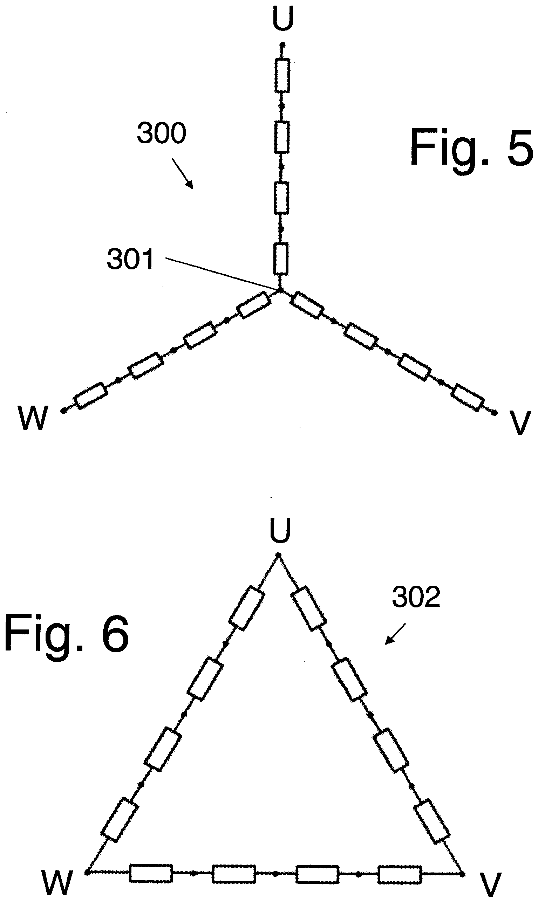

Der Stator 201 kann mit zwei verschiedenen Wicklungsarten ausgeführt sein. Dazu zeigen Fig. 5 und 6 Schaltbilder von Wicklungen des erfindungsgemäßen Permanentmagnet-Synchronmotors 200 nach Fig. 2.

In Fig. 5 ist eine übliche Sternschaltung 300 mit Anschlusspunkten U, V, W und einem Mittelpunkt bzw. Sternpunkt 301 dargestellt. Der Stator kann aber auch mit einer Dreieckschaltung 302 nach Fig. 6 versehen sein. Die Dreieckschaltung bietet hier den Vorteil, dass nur drei Anschlüsse U, V, W erforderlich sind, denn ein Sternanschluss 301 bzw. eine Sternverbindung der Sternschaltung 300 entfällt. Außerdem kann eine Wicklung der Dreieckschaltung 302 je nach Stator 201 fertigungstechnisch einfacher sein oder/und schneller erfolgen.

Bei einem Permanentmagnet-Synchronmotors nach dem Stand der Technik ist bei der Sternschaltung 300 ein so genanntes Sternrelais (nicht gezeigt, aber leicht vorstellbar) erforderlich, welches in einem Kurzschlussfall einer Phase der Sternwicklung 300 in dem Sternpunkt 301 eine Unterbrechung der jeweiligen kurzgeschlossenen Phase bewirkt, um das Bremsmoment im Kurzschlussfall zu begrenzen bzw. zu verhindern. Bei dem erfindungsgemäßen Permanentmagnet-Synchronmotor 200 ist ein solches Relais nicht erforderlich, da aufgrund des speziellen Durchmesser-Längen-Verhältnisses DLV mit den weiteren Parametern ein Kurzschluss einer Phase nur ein begrenztes Bremsmoment des Permanentmagnet-Synchronmotors 200 hervorrufen kann. Aus diesem Grund ist auch die Dreieckschaltung 302 nach Fig. 6 ausführbar, da diese ohne Relais im Stand der Technik nicht verwendet werden kann bzw. ein höherer Aufwand mit Relais zur Trennung von kurzgeschlossenen Phasen notwendig wäre.

Fig. 7 zeigt eine grafische Darstellung eines Bremsmomentes des erfindungsgemäßen Permanentmagnet-Synchronmotors 200 in Abhängigkeit von einem Durchmesser-Längen-Verhältnis DLV von Rotoren 208 des erfindungsgemäßen Permanentmagnet-Synchronmotors 200 nach Fig. 2.

Auf der Ordinate ist ein Bremsmoment $M_{BT}$ in Nm für eine Phase des Permanentmagnet-Synchronmotors 200 aufgetragen. Die Abszisse zeigt Werte des Durchmesser-Längen-Verhältnisses DLV von Rotoren 208. Ein maximales Bremsmoment $M_{BTMAX}$ hier mit einem zulässigen Wert von 0,6 Nm ist als eine punktierte Parallele zur Abszisse eingezeichnet. Das maximale Bremsmoment $M_{BTMAX}$ gibt das Bremsmoment an, bei welchem eine Servolenkung, die mit dem Permanentmagnet-Synchronmotor 200 als Servomotor ausgerüstet ist, z.B. bei einem Kurzschluss einer Phase, noch nicht blockiert bzw. noch funktionsfähig ist.

Es sind vier verschiedenen Kurven aufgetragen, welche unterschiedliche Rotorpolzahlen 210-n des Rotors 208 repräsentieren. Diese vier Kurven werden von der zur Abszisse parallelen punktierten Geraden des maximalen Bremsmoments $M_{BTMAX}$ geschnitten. Jeweilige Parallelen zur Ordinate durch diese Schnittpunkte zeigen auf der Abszisse jeweils ein zugehöriges Durchmesser-Längen-Verhältnis DLV1...4 des Rotors 208 an.

Es wurde herausgefunden, dass das optimale Durchmesser-Längen-Verhältnis DLV für einen Permanentmagnet-Synchronmotor 200 mit einem Rotor 208 mit speichenförmig angeordneten Permanentmagneten 204 nach Fig. 2 und 3 von der Rotorpolzahl 210-n, dem Rotordurchmesser D und der Rotorlänge L abhängt.

So ist z.B. das optimale Durchmesser-Längen-Verhältnis DLV für einen Rotor 208 mit einer Rotorpolzahl 210-6 (n=6) von sechs Rotorpolen und einem Stator 201 mit neun Statornuten 202 größer als der Zahlenwert DLV1 = 1,63.

Die Zusammenhänge von dem optimalen Durchmesser-Längen-Verhältnis DLV und dem Parameter Rotorpolzahl 210-n sind in der folgenden Tabelle 1 übersichtlich dargestellt.

Tabelle 1: DLV und Parameter Rotorpolzahl 210-n

| Nr. | Rotorpolzahl 210-n | Anzahl Statornuten 202 | DLV |
|---|---|---|---|
| 1 | 6 | 9 | > 1,63 |
| 2 | 8 | 12 | > 1,55 |
| 3 | 10 | 12 | > 1,50 |
| 4 | 14 | 12 | > 1,42 |

So ist durch diese Versuchsergebnisse zu erkennen, dass der erfindungsgemäße Permanentmagnet-Synchronmotor 200 mit einem Bremsmoment, welches kleiner als das maximale Bremsmoment $M_{BTMAX}$ ist, eine größere Sicherheit zu einem herkömmlichen Motor bietet, indem in einem möglichen Fehlerfall, zum Beispiel bei einer Servolenkung, die Lenkung nicht durch ein zu hohes Bremsmoment blockiert wird.

Zusätzlich zu dem Durchmesser-Längen-Verhältnis DLV muss der folgende Parameter eingehalten werden. Dieser weitere Parameter ist die Rotorpaketzahl 209-n von kleinen Rotorpaketen. Dies ist in der Tabelle 2 veranschaulicht.

Tabelle 2: Rotorlänge und Rotorpaketzahl

| Nr. | Rotorlänge L (mm) | Rotorpaketzahl 209-n |
|---|---|---|
| 1 | L ≤ 20 | 1 |
| 2 | 20 ≤ L ≤ 40 | 1 oder 2 |
| 3 | 40 ≤ L ≤ 60 | 2 oder 3 |
| 4 | 60 ≤ L ≤ 100 | 3 oder 4 |

Bei einer aktiven axialen Rotorlänge L, die weniger als 20 mm beträgt ist eine Rotorpaketzahl 209-n mit dem Wert n=1 erforderlich. Ein weiteres Beispiel (3) zeigt, dass bei einer Rotorlänge L im Bereich von 40 mm bis 60 mm für die Rotorpaketzahl 209-n der Wert n=2 oder n=3 gilt.

Außerdem gilt kann die Tabelle 1 durch den weiteren Parameter Verschränkungswinkel γ auf die folgende Tabelle 3 erweitert werden.

Tabelle 3: Verschränkungswinkel γ

| Nr. | Rotorpolzahl 210-n | Anzahl Statornuten 202 | Verschränkungswinkel γ (°) | DLV |
|---|---|---|---|---|
| 1 | 6 | 9 | 9 ± 2 | > 1,63 |
| 2 | 8 | 12 | 7,5 ± 2 | > 1,55 |
| 3 | 10 | 12 | 6 ± 2 | > 1,50 |
| 4 | 14 | 12 | 2 ± 1 | > 1,42 |

Es ist zu erkennen, dass bei zunehmender Rotorpolzahl 210-n das Durchmesser-Längen-Verhältnis DLV und auch der Verschränkungswinkel γ abnimmt.

Obgleich die vorliegende Erfindung vorstehend anhand eines bevorzugten Ausführungsbeispiels erläutert wurde, sei sie nicht darauf beschränkt, sondern kann im Rahmen des durch die Ansprüche bestimmten Schutzbereiches modifiziert werden.

Es ist denkbar, dass die Rotorpaketzahl 209-n ein n aufweist, das größer als bei den gezeigten Ausführungen ist. Der Einsatz des erfindungsgemäßen Permanentmagnet-Synchronmotors 200 in einer Servolenkungsanordnung 100 (Fig. 1) eines Kraftfahrzeugs kann nicht nur am Lenkgetriebe 101, sondern auch an der Lenkwelle 102, an dem Ritzel 105 oder auch an anderer Stelle mit entsprechenden Kopplungen erfolgen.

Auch die Anwendung des erfindungsgemäßen Permanentmagnet-Synchronmotors 200 für eine Antriebsvorrichtung in einem Kraftfahrzeug und hier insbesondere für einen Servoantrieb 103 einer Servolenkungsanordnung 100 eines Kraftfahrzeuges sei lediglich beispielhaft zu verstehen. Die Erfindung lässt sich vielmehr bei beliebigen elektrischen Antrieben vorteilhaft einsetzen.

Bezugszeichenliste

| | |
|---|---|
| 100 | Servolenkungsanordnung |
| 101 | Lenkgetriebe |
| 102 | Lenkwelle |
| 103 | Servoantrieb |
| 104 | Steuereinheit |
| 105 | Ritzel |
| 106 | Rad |
| 107 | Spurstange |
| 200 | Permanentmagnet-Synchronmotor |
| 201 | Stator |
| 202 | Statornut |
| 203 | Rotorkern |
| 204 | Permanentmagnet |
| 205 | Rotorkörper |
| 206 | Rotorwelle |
| 207 | Rotorachse |
| 208 | Rotor |
| 209 | Rotorpaket |
| 209-n | Rotorpaketzahl |
| 210-n | Rotorpolzahl |
| 300 | Sternschaltung |
| 301 | Sternpunkt |
| 302 | Dreieckschaltung |

| | |
|---|---|
| DLV, DLV1...4 | Durchmesser-Längen-Verhältnisse |
| D | Rotordurchmesser |
| L | Rotorlänge |
| MBT | Bremsmoment |
| N, S | Magnetpole |
| U, V, W | Anschlüsse |

| $\gamma$ | Verschränkungswinkel |
|---|---|

**Patentansprüche**

1. Permanentmagnet-Synchronmotor (200), insbesondere elektrischer Dreiphasenmotor,
   mit einem Stator (201), in welchem Statorzähne mit dazwischen liegenden Statornuten (202) angeordnet sind, wobei jeweils auf einem Statorzahn zumindest eine Wicklung aus einem elektrisch leitenden Material vorgesehen ist, mit einem Rotor (208) mit Permanentmagneten (204), welche speichenförmig radial in dem Rotor (208) angeordnet sind, wobei der Permanentmagnet-Synchronmotor (200) mit einem vorher festgelegten, begrenzten maximalen Bremsmoment ($M_{TMAX}$) basierend auf einem vorher festgelegten Durchmesser-Längen-Verhältnis (DLV) des Rotors (208), einer Rotorpolzahl (210-n) und einer Anzahl der Statornuten (202) ausgebildet ist, **dadurch gekennzeichnet, dass**
   das vorher festgelegte Durchmesser-Längen-Verhältnis (DLV) des Rotors (208), die Rotorpolzahl (210-n) und die Anzahl der Statornuten (202) entsprechend der folgenden Tabelle im Zusammenhang stehen:

| Rotorpolzahl 210-n | Anzahl Statornuten 202 | DLV |
|---|---|---|
| 6 | 9 | > 1,63 |
| 8 | 12 | > 1,55 |
| 10 | 12 | > 1,50 |
| 14 | 12 | > 1,42 |

   wobei das Durchmesser-Längen-Verhältnis (DLV) das Verhältnis zwischen dem Rotordurchmesser D und der Rotorlänge L ist, nämlich der dimensionslose Quotient DLV = D/L;
   und dass
   der Rotor (208) mindestens ein Rotorpaket (209) aufweist, wobei eine Rotorpaketzahl (209-n) von der Rotorlänge (L) entsprechend der folgenden Tabelle abhängig ist:

| Rotorlänge L (mm) | Rotorpaketzahl 209-n |
|---|---|
| L ≤ 20 | 1 |
| 20 ≤ L ≤ 40 | 1 oder 2 |
| 40 ≤ L ≤ 60 | 2 oder 3 |
| 60 ≤ L ≤ 100 | 3 oder 4 |

2. Permanentmagnet-Synchronmotor nach Anspruch 1, **dadurch gekennzeichnet, dass** der Permanentmagnet-Synchronmotor (200) neun Statornuten (202) oder zwölf Statornuten (202) aufweist und die Rotorpolzahl (210-n) des Rotors (208) sechs, acht, zehn oder vierzehn beträgt.

3. Permanentmagnet-Synchronmotor nach einem der vorherigen Ansprüche, **dadurch gekennzeichnet, dass** bei einer Rotorpaketzahl (209-n) größer als eins die Rotorpakete (209) untereinander um einen Verschränkungswinkel ($\gamma$) um eine Rotorachse (207) verdreht angeordnet sind.

4. Permanentmagnet-Synchronmotor nach einem der vorherigen Ansprüche, **dadurch gekennzeichnet, dass** der Verschränkungswinkel ($\gamma$) von dem Durchmesser-Längen-Verhältnis (DLV) des Rotors (208) gemäß folgender Tabelle abhängig ist:

| Rotorpolzahl 210-n | Anzahl Statornuten 202 | Verschränkungswinkel $\gamma$ (°) | DLV |
|---|---|---|---|
| 6 | 9 | 9 ± 2 | > 1,63 |
| 8 | 12 | 7,5 ± 2 | > 1,55 |

(fortgesetzt)

| Rotorpolzahl 210-n | Anzahl Statornuten 202 | Verschränkungswinkel γ (°) | DLV |
|---|---|---|---|
| 10 | 12 | 6 ± 2 | > 1,50 |
| 14 | 12 | 2 ± 1 | > 1,42 |

5. Permanentmagnet-Synchronmotor nach einem der vorhergehenden Ansprüche, **dadurch gekennzeichnet, dass** der Stator (201) Dreiphasen-Wicklungen in einer Dreieckschaltung (300) aufweist.

6. Permanentmagnet-Synchronmotor nach einem der vorherigen Ansprüche, **dadurch gekennzeichnet, dass** der Stator (201) Dreiphasen-Wicklungen in einer Sternschaltung (302) aufweist.

7. Permanentmagnet-Synchronmotor nach einem der vorhergehenden Ansprüche, **dadurch gekennzeichnet, dass** die Permanentmagnete (204) des Rotors (208) Ferritmagnete oder/und Materialien aus Seltenen Erden enthalten.

8. Elektrische Servolenkungsanordnung (100) eines Kraftfahrzeuges, **gekennzeichnet durch** einen Permanentmagnet-Synchronmotor (200) nach einem der Ansprüche 1 bis 7.


**Claims**

1. Permanent magnet synchronous motor (200), in particular an electrical three-phase motor,
   comprising a stator (201), in which stator teeth having stator grooves (202) positioned between them are arranged, at least one winding of an electrically conductive material being provided on each stator tooth,
   comprising a rotor (208) having permanent magnets (204) which are arranged radially in the rotor (208) in the shape of spokes,
   the permanent magnet synchronous motor (200) being formed with a predetermined, limited maximum braking moment ($M_{TMAX}$) on the basis of a predetermined diameter-to-length ratio (DLV) of the rotor (208), a rotor pole count (210-n) and a number of stator grooves (202),
   **characterised in that**
   the predetermined diameter-to-length ratio (DLV) of the rotor (208), the rotor pole count (210-n) and the number of stator grooves (202) being related as per the following table:

| Rotor pole count 210-n | Number of stator grooves 202 | DLV |
|---|---|---|
| 6 | 9 | > 1.63 |
| 8 | 12 | > 1.55 |
| 10 | 12 | > 1.50 |
| 14 | 12 | > 1.42 |

the diameter-to-length ratio (DLV) being the ratio between the rotor diameter D and the rotor length L, namely the dimensionless quotient DLV = D/L;
and **in that**
the rotor (208) has at least one rotor package (209), a rotor package count (209-n) being dependent on the rotor length (L) as per the following table:

| Rotor length L (mm) | Rotor package count 209-n |
|---|---|
| L ≤ 20 | 1 |
| 20 ≤ L ≤ 40 | 1 or 2 |
| 40 ≤ L ≤ 60 | 2 or 3 |
| 60 ≤ L ≤ 100 | 3 or 4 |

**2.** Permanent magnet synchronous motor according to claim 1,
**characterised in that**
the permanent magnet synchronous motor (200) has nine stator grooves (202) or twelve stator grooves (202), and the rotor pole count (210-n) of the rotor (208) is six, eight, ten or fourteen.

**3.** Permanent magnet synchronous motor according to any of the preceding claims,
**characterised in that**,
in the event of a rotor package count (209-n) greater than one, the rotor packages (209) are twisted about a rotor axis (207) through an offset angle ($\gamma$) with respect to one another.

**4.** Permanent magnet synchronous motor according to any of the preceding claims,
**characterised in that**
the offset angle ($\gamma$) is dependent on the diameter-to-length ratio (DLV) of the rotor (208) as per the following table:

| Rotor pole count 210-n | Number of stator grooves 202 | Offset angle $\gamma$ (°) | DLV |
|---|---|---|---|
| 6 | 9 | $9 \pm 2$ | > 1.63 |
| 8 | 12 | $7.5 \pm 2$ | > 1.55 |
| 10 | 12 | $6 \pm 2$ | > 1.50 |
| 14 | 12 | $2 \pm 1$ | > 1.42 |

**5.** Permanent magnet synchronous motor according to any of the preceding claims,
**characterised in that**
the stator (201) has three-phase windings in a delta connection (300).

**6.** Permanent magnet synchronous motor according to any of the preceding claims,
**characterised in that**
the stator (201) has three-phase windings in a star connection (302).

**7.** Permanent magnet synchronous motor according to any of the preceding claims,
**characterised in that**
the permanent magnets (204) of the rotor (208) are ferrite magnets and/or contain materials made from rare earths.

**8.** Electric power-steering arrangement (100) of a motor vehicle, **characterised by** a permanent magnet synchronous motor (200) according to any of claims 1 to 7.

**Revendications**

**1.** Moteur synchrone à aimants permanents (200), en particulier moteur électrique triphasé,
comprenant un stator (201) dans lequel sont disposées des dents de stator entre lesquelles sont disposées des encoches de stator (202), au moins un enroulement dans un matériau électriquement conducteur étant prévu sur chaque dent de stator,
comprenant un rotor (208) avec des aimants permanents (204) qui sont disposés radialement en forme de rayons dans le rotor (208),
lequel moteur synchrone à aimants permanents (200) est réalisé avec un couple de freinage maximal limité prédéfini ($M_{TMAX}$) basé sur un rapport diamètre-longueur prédéfini (DLV) du rotor (208), un nombre de pôles de rotor (210-n) et un nombre d'encoches de stator (202),
**caractérisé en ce que**
le rapport diamètre-longueur prédéfini (DLV) du rotor (208), le nombre de pôles de rotor (210-n) et le nombre d'encoches de stator (202) sont liés comme indiqué dans le tableau suivant :

| Nombre de pôles de rotor 210-n | Nombre d'encoches de stator 202 | DLV |
|---|---|---|
| 6 | 9 | > 1,63 |

(suite)

| Nombre de pôles de rotor 210-n | Nombre d'encoches de stator 202 | DLV |
|---|---|---|
| 8 | 12 | > 1,55 |
| 10 | 12 | > 1,50 |
| 14 | 12 | > 1,42 |

dans lequel le rapport diamètre-longueur (DLV) est le rapport entre le diamètre de rotor D et la longueur de rotor L, à savoir le quotient sans dimension DLV = D/L ;
et que
le rotor (208) présente au moins un paquet de rotor (209), un nombre de paquets de rotor (209-n) dépendant de la longueur de rotor (L) comme indiqué dans le tableau suivant :

| Longueur de rotor L (mm) | Nombre de paquets de rotor 209-n |
|---|---|
| $L \leq 20$ | 1 |
| $20 \leq L \leq 40$ | 1 ou 2 |
| $40 \leq L \leq 60$ | 2 ou 3 |
| $60 \leq L \leq 100$ | 3 ou 4 |

2. Moteur synchrone à aimants permanents selon la revendication 1,
**caractérisé en ce**
**que** le moteur synchrone à aimants permanents (200) présente neuf encoches de stator (202) ou douze encoches de stator (202) et le nombre de pôles de rotor (210-n) du rotor (208) est six, huit, dix ou quatorze.

3. Moteur synchrone à aimants permanents selon l'une des revendications précédentes,
**caractérisé en ce**
**que**, si le nombre de paquets de rotor (209-n) est supérieur à un, les paquets de rotor (209) sont décalés les uns par rapport aux autres d'un angle d'entrelacement ($\gamma$) autour d'un axe de rotor (207).

4. Moteur synchrone à aimants permanents selon l'une des revendications précédentes,
**caractérisé en ce**
**que** l'angle d'entrelacement ($\gamma$) dépend du rapport diamètre-longueur (DLV) du rotor (208) comme indiqué dans le tableau suivant :

| Nombre de pôles de rotor 210-n | Nombre d'encoches de stator 202 | Angle d'entrelacement $\gamma$ (°) | DLV |
|---|---|---|---|
| 6 | 9 | $9 \pm 2$ | > 1,63 |
| 8 | 12 | $7,5 \pm 2$ | > 1,55 |
| 10 | 12 | $6 \pm 2$ | > 1,50 |
| 14 | 12 | $2 \pm 1$ | >1,42 |

5. Moteur synchrone à aimants permanents selon l'une des revendications précédentes,
**caractérisé en ce**
**que** le stator (201) présente des enroulements triphasés dans un couplage triangle (300).

6. Moteur synchrone à aimants permanents selon l'une des revendications précédentes,
**caractérisé en ce**
**que** le stator (201) présente des enroulements triphasés dans un couplage étoile (302).

7. Moteur synchrone à aimants permanents selon l'une des revendications précédentes,

**caractérisé en ce**
**que** les aimants permanents (204) du rotor (208) contiennent des aimants en ferrite et/ou des matériaux à base de terres rares.

8. Dispositif de direction assistée électrique (100) d'un véhicule automobile, **caractérisé par** un moteur synchrone à aimants permanents (200) selon l'une des revendications 1 à 7.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2002060740 A2
- EP 1028047 B1
- DE 102009000681 A1
- DE 102007029157 A1
- EP 1677408 A1